# FASCICULE DE BREVET EUROPEEN

(11) **EP 2 098 393 B1**
(45) Date de publication et mention de la délivrance du brevet: **13.04.2011**
(21) Numéro de dépôt: 09153681.3
(22) Date de dépôt: 25.02.2009
(51) Int. Cl.: B60J 1/20

(54) **Store d'occultation comprenant un tube d'enroulement monté sur un berceau support, élément de store et véhicule correspondants**
Abdunkelungsrollo umfassend eine auf einer Halterung montierte Wickelrolle, Baugruppe für ein solches Rollo und Fahrzeug mit einem solchen Rollo
Roller blind comprising a tube mounted on a support, assembly for such a blind and vehicle with such a blind

(30) Priorité: 04.03.2008 FR 0851420
(43) Date de publication de la demande: 09.09.2009
(73) Titulaire: Advanced Comfort Systems France SAS - ACS France, 79300 Bressuire (FR)
(72) Inventeur: Jincheleau, Michel, 79320, Moncoutant (FR)
(74) Mandataire: Bioret, Ludovic

(56) Documents cités:
- DE-A1-102005 038 758
- DE-A1-102006 037 149
- FR-A- 2 903 347

## Description

Le domaine de l'invention est celui de l'occultation de surfaces vitrées ou d'ouvertures dans les véhicules automobiles. Plus précisément, l'invention concerne les stores d'occultation du type défini dans le préambule de la revendication 1. Un tel store est connu de FR 2903347A.

Classiquement, l'une des extrémités de cette toile est montée sur un rouleau ou tube d'enroulement mobile en rotation. L'autre extrémité de la toile peut être munie d'une barre de tirage. Un passage, définissant une fente, est généralement prévu dans un boîtier du store et/ou dans un élément de structure du véhicule, au travers duquel la toile peut être déployée ou repliée. En position repliée, la toile est essentiellement entourée autour du tube d'enroulement, et la barre de tirage se trouve donc au voisinage de celui-ci.

Dans certains cas, le store est actionné manuellement, et l'utilisateur agit alors sur la barre de tirage de façon à l'éloigner du tube d'enroulement. Le repli est alors obtenu par l'action d'un ressort de rappel entraînant le rouleau d'enroulement. Dans d'autres cas, le store est motorisé.

En général, le store est monté sur un élément de structure du véhicule. Par exemple, pour les stores de vitres latérales, il est logé sur le caisson d'une portière, ou à l'intérieur de celui-ci. La toile du store peut être alors déployée, de bas en haut, pour occulter au moins la plus grande partie de la baie de la portière. Le store peut également être monté sur un bord latéral de la baie, et être déployé horizontalement jusqu'à l'autre bord de la baie.

L'ensemble des éléments composant le store est généralement monté dans un boîtier, ou élément de support, lui-même solidarisé à la structure du véhicule.

Selon une technique connue, les boîtiers sont réalisés par injection de matière plastique ou composite, par exemple en matière ABS PC. Un tel boîtier intègre des moyens d'aide à la mise en place, ou de positionnement, du tube d'enroulement.

Ces moyens d'aide à la mise en place peuvent être constitués par deux extensions, ou porte-palier, espacées l'une de l'autre d'une distance correspondant sensiblement à la longueur du tube d'enroulement. Ces extensions sont destinées à porter des paliers sur lesquels le tube d'enroulement est monté mobile à rotation. Or, en pratique, de tels boîtiers réalisés par injection sont obtenus avec :
- une tolérance de +/- 1,5 mm sur la cote séparant les deux extensions ;
- un coefficient de dilatation en température (entre -30°C et 85°C) entraînant une dilatation possible de +/- 1,5 mm.

Au total, selon les échantillons et les conditions de température ambiante, la cote entre les deux extensions du boîtier peut donc présenter une dispersion dimensionnelle allant jusqu'à +/- 3 mm.

Une telle variation dimensionnelle s'avère trop importante.

En effet, une variation dimensionnelle de cet ordre peut se traduire par :
- des difficultés lors du montage sur le boîtier des paliers pré-assemblés avec le tube d'enroulement, ou par une résistance à la rotation du tube d'enroulement lors de l'utilisation du store, si la cote effective entre les extensions est inférieure à sa valeur nominale ;
- un jeu trop important entre le tube d'enroulement et ses paliers une fois ceux-ci montés dans les extensions, susceptible de provoquer des débattements latéraux de la toile lors du déploiement/repliement de celle-ci, voire des nuisances sonores pendant le roulage du véhicule, si la cote effective entre les extensions du boîtier est supérieure à sa valeur nominale.

Bien entendu, dans l'un ou l'autre cas, les phénomènes induits par la variation dimensionnelle de l'ordre +/- 3 mm entre les extensions et le boîtier est de nature à entraîner une perception de mauvaise qualité du store.

L'invention a notamment pour objectif de pallier ces inconvénients de l'art antérieur.

Plus précisément, l'invention a pour objectif de proposer une technique de montage d'un tube d'enroulement d'un store d'occultation qui permette de positionner plus précisément le tube d'enroulement comparé à l'art antérieur mentionné précédemment.

L'invention a également pour objectif de fournir une telle technique qui permette d'améliorer la qualité du store perçue par l'utilisateur.

L'invention a aussi pour objectif de fournir une telle technique qui assure une grande simplicité d'assemblage du store et de montage de celui-ci à l'intérieur du véhicule.

Un autre objectif de l'invention est de fournir une telle technique qui soit simple de conception, facile à mettre en oeuvre et peu coûteuse à réaliser.

Dans un mode de réalisation particulier, un objectif de l'invention est de fournir une telle technique, permettant de simplifier le montage des stores dans les véhicules, tout en assurant un pré-bandage correct.

Ces objectifs, ainsi que d'autres qui apparaîtront par la suite, sont atteints à l'aide d'un store d'occultation, du type comprenant une toile d'occultation, mobile entre une position repliée et une position déployée, ladite toile étant solidarisée à l'une de ses extrémités à un tube d'enroulement monté rotatif à chacune de ses extrémités sur un palier.

Selon l'invention, un tel store d'occultation comprend un boîtier en matière plastique portant un berceau support dudit tube, ledit berceau étant formé dans un matériau métallique et se présentant sous la forme d'une règle repliée sensiblement à angle droit à chacune de ses extrémités pour former deux oreilles destinées à coopérer avec lesdits paliers.

Ainsi, de façon nouvelle et inventive, l'invention propose de mettre en oeuvre un support du tube d'enroulement en deux parties, résultant de l'assemblage coopératif d'un boîtier plastique, présentant un avantage en termes de fabrication et de coût de revient, avec un berceau métallique dont le coefficient de dilatation thermique est plus faible que celui du plastique dans conditions de température auxquelles sont soumis les véhicules, pour permettre de réduire les variations dimensionnelles entre les logements des paliers.

De façon préférée, lesdites oreilles comprennent des moyens d'aide à la mise en place et/ou de retenue desdits paliers.

Ainsi, on facilite le montage et le blocage des paliers.

Selon un aspect avantageux de l'invention, lesdits paliers comprennent chacun un corps de base destiné à être solidarisé à une oreille dudit berceau support, et un ergot destiné à pénétrer ledit tube d'enroulement, s'étendant à partir dudit corps de base.

Ainsi, on bénéficie des avantages de paliers courts. Par ailleurs, il n'est pas nécessaire de prévoir un axe supplémentaire traversant le tube d'enroulement pour supporter ce dernier.

Selon un mode de réalisation avantageux de l'invention, ledit corps de base de chaque palier comprend une partie formant ceinture, à l'intérieur de laquelle une oreille dudit berceau support vient se loger.

Ainsi, on monte un palier en l'enfichant simplement sur une oreille.

Préférentiellement, ladite ceinture comprend une partie avant à partir de laquelle ledit ergot s'étend, deux parois latérales s'étendant vers l'arrière à partir de ladite partie avant, et une traverse arrière reliant lesdits parois latérales.

Avantageusement, lesdits moyens d'aide à la mise en place et/ou de retenue coopèrent avec ladite traverse.

De façon avantageuse, chacune desdites oreilles présente au moins un bossage contre lequel ladite traverse est destinée à être plaquée.

Ainsi, on positionne les paliers simplement et avec précision.

De façon préférentielle, ledit ou lesdits bossages sont surmontés par une excroissance de retenue.

Ainsi, on réalise des butées s'opposant au retrait des paliers.

Selon un aspect particulier de l'invention, lesdites oreilles s'étendent à partir d'un pli dans lequel est ménagée une cavité de rigidification.

Ainsi, on renforce la liaison entre les oreilles et la règle dans la zone de pliage à l'aide de la cavité de rigidification.

Selon un mode de réalisation particulièrement avantageux de l'invention, ledit boîtier est réalisé en polypropylène chargé en fibres de verre.

Ainsi, en prévoyant un boîtier en une telle matière composite, on améliore la résistance et la rigidité du boîtier. D'autre part, il s'agit d'un débouché avantageux dans le domaine automobile pour le respect des exigences réglementaires en termes de recyclage des fibres de verre usagées.

L'invention concerne également un élément de store d'occultation, du type comprenant une toile d'occultation, mobile entre une position repliée et une position déployée, ladite toile étant solidarisée à l'une de ses extrémités à un tube d'enroulement monté rotatif à chacune de ses extrémités sur un palier, tel qu'il comprend un berceau support dudit tube, ledit berceau étant formé dans un matériau métallique et se présentant sous la forme d'une règle repliée sensiblement à angle droit à chacune de ses extrémités pour former deux oreilles destinées à coopérer avec lesdits paliers, ledit berceau étant configuré pour être rapporté sur un boîtier en matière plastique de façon à former un des stores d'occultation venant d'être décrits.

L'invention concerne encore un véhicule équipé d'au moins un store tel que décrit ci-dessus.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue d'ensemble d'un store d'occultation selon un mode de réalisation de l'invention ;
- la figure 2 est une vue d'un boîtier de store équipé d'un berceau support de tube d'enroulement selon l'invention ;
- la figure 3 est une vue d'une extrémité d'un boîtier de store équipé d'un berceau support de tube d'enroulement selon l'invention ;
- les figures 4 et 5 sont des vues en coupe d'un boîtier de store équipé d'un berceau support de tube d'enroulement selon l'invention ;
- la figure 6 est une vue en perspective d'un palier de tube d'enroulement.

Tel qu'indiqué précédemment, le principe de l'invention réside notamment dans le fait de faire exercer la fonction support du tube d'enroulement par une pièce métallique indépendante du boîtier du store, réalisé en matière plastique, de façon à présenter des points d'ancrage pour les paliers du tube d'enroulement avec un écartement dont les tolérances sont bien inférieures à celles de l'art antérieur, sans que le coût de fabrication et la complexité soient fortement augmentés.

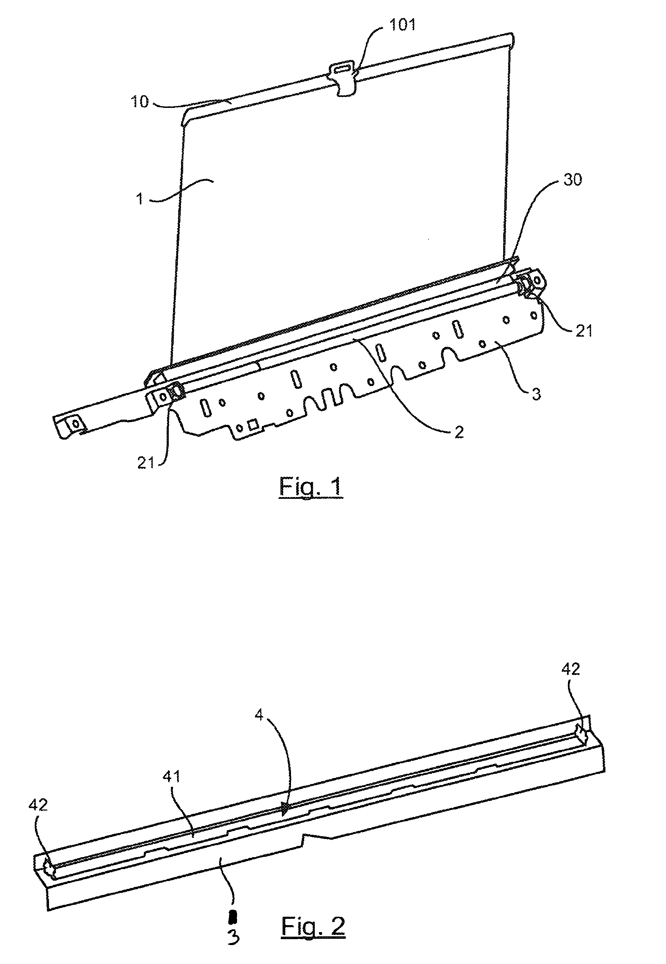

Tel que représenté par la figure 1, un store d'occultation comprend, de façon connue en soi, une toile d'occultation 1 par exemple opaque, cette toile étant montée sur un tube d'enroulement 2. L'extrémité libre de la toile 1 est équipée d'un élément de tirage 10, constitué d'une barre centrale permettant d'entraîner la toile, une patte de tirage 101 étant montée sur la barre de tirage de façon à faciliter la préhension de celle-ci.

Le tube d'enroulement 2 est monté mobile en rotation sur des paliers 21 montés aux deux extrémités du tube.

Ces paliers 21 sont portés par des supports décrits plus en détail par la suite.

Le store est ici monté dans un boîtier 3 présentant une fente au travers de laquelle la toile 1 est susceptible d'être déployée et repliée.

Selon le principe de l'invention, la fonction support des paliers 21 est exercée par un berceau support métallique décrit en référence aux figures 2 à 5.

Tel qu'illustré par la figure 2, le berceau métallique 4 supportant le tube d'enroulement 2 par l'intermédiaire de paliers 21 présente une forme générale en U et comprend une partie centrale essentiellement rectiligne (dont la longueur est légèrement supérieure à celle du tube d'enroulement) et de deux parties d'extrémité porte-palier, appelées par la suite oreilles, sur lesquelles les paliers sont destinés à être rapportés.

En d'autres termes, le berceau 4 se présente sous la forme d'une feuille métallique 41 repliée à chacune de ses extrémités pour présenter deux oreilles 42 destinées à porter les paliers 21.

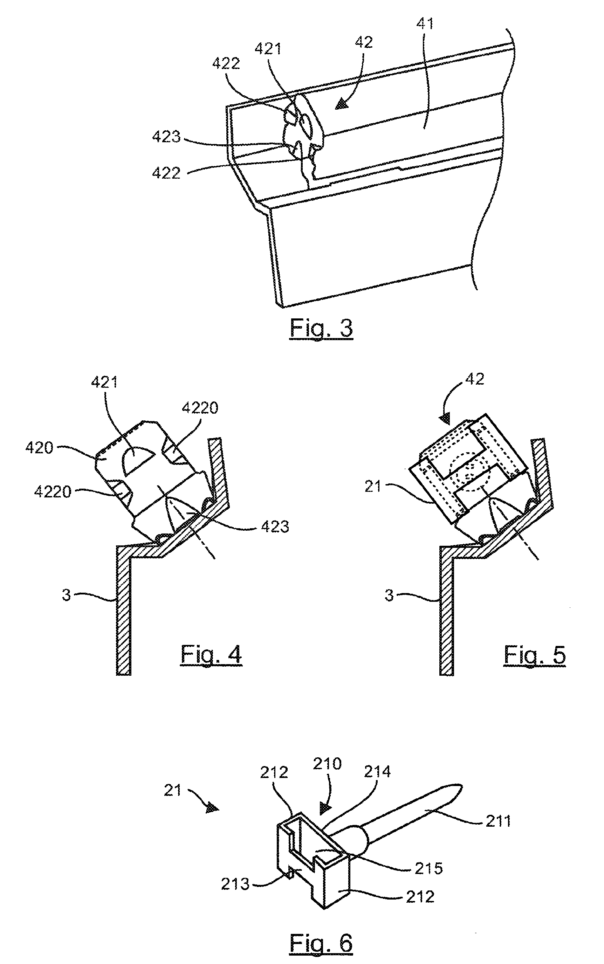

Avant de poursuivre la description du berceau 4, on décrit, en référence à la figure 6, la structure des paliers 21.

Tel qu'illustré par la figure 6, un palier 21 comprend :
- un corps de base 210 présentant une face avant 214 à partir de laquelle s'étend un axe 211 destiné à porter le tube d'enroulement 2 ;
- deux parois latérales 212, s'étendant dans une direction opposée à celle de l'axe 211 par rapport à la face avant 214 ;
- une traverse 213 reliant les parois latérales 212.

Le corps de base 210 d'un palier 21 ainsi constitué présente ainsi un passage 215 pour une oreille 42, ce passage 215 étant délimité par la face avant 214, les parois latérales 212 et la traverse 213.

On note que la traverse 213 présente une hauteur inférieure à celle des parois 212, procurant à la partie arrière du corps de base 210 une forme en H.

Parallèlement, les oreilles 42 du berceau métallique 4 comprennent des moyens de positionnement et/ou de retenue d'un palier tel que celui qui vient d'être décrit.

En référence aux figures 3 à 5, chaque oreille comprend, selon le présent mode de réalisation :
- deux bossages latéraux 422, s'étendant vers l'arrière de l'oreille 42 par rapport à la règle 41 ;
- une excroissance 421, s'étendant également vers l'arrière de l'oreille 42 par rapport à la règle 41 ;
- une cavité 423, s'étendant à partir de l'arrière de l'oreille 42 en direction de la règle 41.

Tel qu'illustré par la figure 4, les bossages 422 présentent des portions planes 4220 dans le prolongement l'une de l'autre, ces portions planes étant destinées à former des surfaces d'appui contre lesquelles la traverse 213 d'un palier est plaquée lors de la mise en place du palier sur l'oreille correspondante.

On note que l'excroissance 421 surmonte les bossages 422, et s'écarte du plan principal 420 de l'oreille 42 plus largement que les portions planes 4220, de telle sorte que, une fois le palier 21 monté sur l'oreille, l'excroissance 421 constitue une butée pour la traverse 213 du palier, s'opposant ainsi au retrait du palier à partir de l'oreille correspondante.

Par ailleurs, la cavité 423, obtenue par un renfoncement dans le pli à partir duquel s'étend l'oreille, permet de rigidifier le pli séparant la règle 41 de l'oreille 42, et donc de maintenir de façon quasiment invariable l'angle droit entre la règle 41 et l'oreille 42.

À titre indicatif, un berceau support 4 tel que celui qui vient d'être décrit peut être réalisé en acier, permettant d'obtenir :
- une tolérance de +/- 0,5 mm sur la cote séparant les deux oreilles ;
- un coefficient de dilatation en température (entre - 30° C et 85° C) entraînant une dilatation possible de +/- 0,5 mm, inférieure à celle d'une matière plastique.

Au total, un tel berceau support 4 permet donc d'obtenir une variation dimensionnelle maximale de +/- 1 mm sur la cote séparant les deux oreilles (alors que la variation dimensionnelle maximale obtenue pour la même cote avec la solution de l'art antérieur est de +/- 3 mm).

Le montage d'un store selon l'invention s'effectue de la façon suivante.

Le berceau support 4 est solidarisé, par exemple par clippage, avec le boîtier 3, qui présente généralement une forme adaptée au caisson de la portière, de façon à faciliter son montage et sa fixation à sur un élément de structure du véhicule.

Les paliers 21 sont mis en place sur le tube d'enroulement 2.

L'ensemble formé par le tube d'enroulement 2 et les paliers 21 est ensuite rapporté sur le berceau support 4.

Pour cela, les paliers 21 sont engagés sur les oreilles 42, de telle manière que ces dernières pénètrent à l'intérieur du passage 215 délimité par la ceinture du corps de base 210 des paliers 21, jusqu'à ce que la traverse 213 se plaque sur les portions 4220. Le passage de la traverse 213 sur l'excroissance 421 de l'oreille correspondante est permis par une légère déformation de la traverse et/ou de l'excroissance, le palier une fois en place étant retenu sur l'oreille du fait que la traverse vienne en butée contre l'excroissance 421.

Le palier 21 occupe alors sur l'oreille 42 une position telle que celle décrite par la figure 5.

On note que, selon le mode de réalisation qui vient d'être décrit, le berceau 4 est rapporté sur un boîtier de store, et maintenu à celui-ci par exemple par clippage, collage et/ou rivetage. On fournit alors au constructeur automobile un store complet, pré-assemblé.

Toutefois, un élément de store, comprenant le berceau sur lequel le tube est monté peut également être livré, sans boîtier, avec ses tours de garde réalisés. Cet élément de store peut alors être clippé directement sur un boîtier déjà monté sur le véhicule.

Cette approche permet un montage simplifié, tout en s'affranchissant de l'utilisation de la technique dite d'agrafes pré-bandées.

## Revendications

1. Store d'occultation, du type comprenant une toile d'occultation (1), mobile entre une position repliée et une position déployée, ladite toile (1) étant solidarisée à l'une de ses extrémités à un tube d'enroulement (2) monté rotatif à chacune de ses extrémités sur un palier (21),
**caractérisé en ce qu'**il comprend un boîtier (3) en matière plastique portant un berceau (4) support dudit tube, ledit berceau (4) étant formé dans un matériau métallique et se présentant sous la forme d'une règle (41) repliée sensiblement à angle droit à chacune de ses extrémités pour former deux oreilles (42) destinées à coopérer avec lesdits paliers (21).

2. Store d'occultation selon la revendication 1, **caractérisé en ce que** lesdites oreilles (42) comprennent des moyens d'aide à la mise en place et/ou de retenue desdits paliers (21).

3. Store d'occultation selon l'une des revendications 1 et 2, **caractérisé en ce que** lesdits paliers (21) comprennent chacun un corps de base (210) destiné à être solidarisé à une oreille (42) dudit berceau (4) support, et un ergot (211) destiné à pénétrer ledit tube d'enroulement (2), s'étendant à partir dudit corps de base (210).

4. Store d'occultation selon la revendication 3, **caractérisé en ce que** ledit corps de base (210) de chaque palier comprend une partie formant ceinture, à l'intérieur de laquelle une oreille (42) dudit berceau support vient se loger.

5. Store d'occultation selon la revendication 4, **caractérisé en ce que** ladite ceinture comprend une partie avant (214) à partir de laquelle ledit ergot (211) s'étend, deux parois latérales (212) s'étendant vers l'arrière à partir de ladite partie avant, et une traverse arrière (213) reliant lesdits parois latérales.

6. Store d'occultation selon les revendications 2 et 5, **caractérisé en ce que** lesdits moyens d'aide à la mise en place et/ou de retenue coopèrent avec ladite traverse (213).

7. Store d'occultation selon la revendication 6, **caractérisé en ce que** chacune desdites oreilles (42) présente au moins un bossage (422) contre lequel ladite traverse (213) est destinée à être plaquée.

8. Store d'occultation selon la revendication 7, **caractérisé en ce que** ledit ou lesdits bossages (422) sont surmontés par une excroissance de retenue (421).

9. Store d'occultation selon l'une quelconque des revendications 1 à 8, **caractérisé en ce que** lesdites oreilles (42) s'étendent à partir d'un pli dans lequel est ménagée une cavité de rigidification (423).

10. Store d'occultation selon l'une quelconque des revendications 1 à 9, **caractérisé en ce que** ledit boîtier (3) est réalisé en polypropylène chargé en fibres de verre.

11. Elément de store d'occultation, du type comprenant une toile d'occultation (1), mobile entre une position repliée et une position déployée, ladite toile (1) étant solidarisée à l'une de ses extrémités à un tube d'enroulement (2) monté rotatif à chacune de ses extrémités sur un palier (21),
**caractérisé en ce qu'**il comprend un berceau (4) support dudit tube (2), ledit berceau (4) étant formé dans un matériau métallique et se présentant sous la forme d'une règle (41) repliée sensiblement à angle droit à chacune de ses extrémités pour former deux oreilles (42) destinées à coopérer avec lesdits paliers (21),
ledit berceau (4) étant configuré pour être rapporté sur un boîtier (3) en matière plastique, de façon à former un store d'occultation selon l'une quelconque des revendications 1 à 10.

12. Véhicule équipé d'au moins un store d'occultation selon l'une quelconque des revendications 1 à 10, du type comprenant une toile d'occultation (1), mobile entre une position repliée et une position déployée, ladite toile (1) étant solidarisé à l'une de ses extrémités à un tube d'enroulement (2) monté rotatif à chacune de ses extrémités sur un palier (21),
ledit store comprenant un boîtier (3) en matière plastique portant un berceau (4) support dudit tube, ledit berceau (4) étant formé dans un matériau métallique et se présentant sous la forme d'une règle (41) repliée sensiblement à angle droit à chacune de ses extrémités pour former deux oreilles (42) destinées à coopérer avec lesdits paliers (21).

## Claims

1. Screen-type roller blind, of the type comprising a screening web (1) which can be moved between a folded position and a deployed position, the web (1) being fixedly joined at one of the ends thereof to a rolling tube (2) which is mounted so as to rotate at each of the ends thereof on a bearing (21),
**characterised in that** it comprises a casing (3) of plastics material which carries a support assembly (4) for the tube, the assembly (4) being formed from a metal material and being in the form of a rule (41) which is bent substantially at a right angle at each of the ends thereof in order to form two lugs (42) which are intended to co-operate with the bearings (21).

2. Screen-type roller blind according to claim 1, **characterised in that** the lugs (42) comprise means for assisting the positioning and/or the retention of the bearings (21).

3. Screen-type roller blind according to either claim 1 or claim 2, **characterised in that** the bearings (21) each comprise a base member (210) which is intended to be fixedly joined to a lug (42) of the support assembly (4) and a pin (211) which is intended to be introduced into the rolling tube (2), and which extends from the base member (210).

4. Screen-type roller blind according to claim 3, **characterised in that** the base member (210) of each bearing comprises a portion which forms a belt, inside which a lug (42) of the support assembly is accommodated.

5. Screen-type roller blind according to claim 4, **characterised in that** the belt comprises a front portion (214) from which the pin (211) extends, two lateral walls (212) which extend towards the rear from the front portion, and a rear cross-member (213) which connects the lateral walls.

6. Screen-type roller blind according to claims 2 and 5, **characterised in that** the means for assisting the positioning and/or retention co-operate with the cross-member (213).

7. Screen-type roller blind according to claim 6, **characterised in that** each of the lugs (42) has at least one projection (422) against which the cross-member (213) is intended to be pressed.

8. Screen-type roller blind according to claim 7, **characterised in that** the projection(s) (422) is/are surmounted by a protruding retention member (421).

9. Screen-type roller blind according to any one of claims 1 to 8, **characterised in that** the lugs (42) extend from a fold in which a reinforcement cavity (423) is provided.

10. Screen-type roller blind according to any one of claims 1 to 9, **characterised in that** the casing (3) is produced from polypropylene which is charged with glass fibres.

11. Screen-type roller blind element, of the type comprising a screening web (1), which can be moved between a folded position and a deployed position, the web (1) being fixedly joined at one of the ends thereof to a rolling tube (2) which is rotatably mounted at each of the ends thereof on a bearing (21),
**characterised in that** it comprises a support assembly (4) for the tube (2), the assembly (4) being formed from a metal material and being in the form of a rule (41) which is bent substantially at a right angle at each of the ends thereof in order to form two lugs (42) which are intended to co-operate with the bearings (21),
the assembly (4) being configured to be fitted to a casing (3) of plastics material in order to form a screen-type roller blind according to any one of claims 1 to 10.

12. Vehicle equipped with at least one screen-type roller blind according to any one of claims 1 to 10, of the type comprising a screening web (1) which can be moved between a folded position and a deployed position, the web (1) being fixedly joined at one of the ends thereof to a rolling tube (2) which is rotatably mounted at each of the ends thereof on a bearing (21),
the blind comprising a casing (3) of plastics material which carries an assembly (4) for supporting the tube, the assembly (4) being formed from a metal material and being in the form of a rule (41) which is folded substantially at right-angles at each of the ends thereof in order to form two lugs (42) which are intended to co-operate with the bearings (21).

## Patentansprüche

1. Verdunkelungsrollladen des Typs, der ein Verdunkelungstuch (1) aufweist, das zwischen einer aufgerollten und einer ausgebreiteten Position beweglich ist, wobei das Tuch (1) an einem seiner Enden fest mit einer Aufrollröhre (2), die an jedem ihrer Enden auf einem Lager (21) drehend montiert ist, verbunden ist, **dadurch gekennzeichnet, dass** er ein Gehäuse (3) aus Kunststoff aufweist, das einen Tragsattel (4) der Röhre trägt, wobei der Tragsattel (4) aus einem Metallwerkstoff ausgebildet ist und die Form einer Schiene (41) hat, die im Wesentlichen im rechten Winkel an jedem ihrer Enden zurückgefaltet ist, um zwei Ohren (42) zu bilden, die dazu bestimmt sind, mit den Lagern (21) zusammenzuwirken.

2. Verdunkelungsrollladen nach Anspruch 1, **dadurch gekennzeichnet, dass** die Ohren (42) Hilfsmittel zum Anbringen und/oder Zurückhalten der Lager (21) aufweisen.

3. Verdunkelungsrollladen nach einem der Ansprüche 1 und 2, **dadurch gekennzeichnet, dass** die Lager (21) jeweils einen Basiskörper (210) aufweisen, der dazu bestimmt ist, fest mit einem Ohr (42) des Tragsattels (4) verbunden zu werden, und einen Dorn (211), der dazu bestimmt ist, in die Aufrollröhre (2), die sich ausgehend von dem Basiskörper (210) erstreckt, einzudringen.

4. Verdunkelungsrollladen nach Anspruch 3, **dadurch gekennzeichnet, dass** der Basiskörper (210) jedes Lagers einen Teil aufweist, der einen Gürtel bildet, in dessen Inneres sich ein Ohr (42) des Tragsattels einfügt.

5. Verdunkelungsrollladen nach Anspruch 4, **dadurch gekennzeichnet, dass** der Gürtel einen Vorderteil (214) aufweist, von dem ausgehend sich der Dorn (211) erstreckt, wobei sich zwei Seitenwände (212) ausgehend von dem Vorderteil nach hinten erstrecken, und eine hintere Querstrebe (213), die die Seitenwände verbindet.

6. Verdunkelungsrollladen nach den Ansprüchen 2 und 5, **dadurch gekennzeichnet, dass** die Hilfsmittel zum Anbringen und/oder Zurückhalten mit der Querstrebe (213) zusammenwirken.

7. Verdunkelungsrollladen nach Anspruch 6, **dadurch gekennzeichnet, dass** jedes der Ohren (42) mindestens einen Höcker (422) aufweist, gegen welchen die Querstrebe (213) angedrückt werden soll.

8. Verdunkelungsrollladen nach Anspruch 7, **dadurch gekennzeichnet, dass** sich oberhalb der Höcker (422) ein Rückhaltevorsprung (421) befindet.

9. Verdunkelungsrollladen nach einem der Ansprüche 1 bis 8, **dadurch gekennzeichnet, dass** sich die Ohren (42) ausgehend von einer Falte erstrecken, in der ein Verstärkungshohlraum (423) eingerichtet ist.

10. Verdunkelungsrollladen nach einem der Ansprüche 1 bis 9, **dadurch gekennzeichnet, dass** das Gehäuse (3) aus einem Polypropylen mit Glasfaser hergestellt ist.

11. Element eines Verdunkelungsrollladens des Typs, der ein Verdunkelungstuch (1) aufweist, das zwischen einer aufgerollten und einer ausgebreiteten Position beweglich ist, wobei das Tuch (1) an einem seiner Enden mit einer Aufrollröhre (2), die an jedem ihrer Enden auf einem Lager (21) drehend montiert ist, fest verbunden ist,
**dadurch gekennzeichnet, dass** es einen Tragsattel (4) der Röhre (2) aufweist, wobei der Tragsattel (4) aus einem Metallwerkstoff ausgebildet ist und die Form einer Schiene (41) hat, die im Wesentlichen an jedem ihrer Enden im rechten Winkel zurückgefaltet ist, um zwei Ohren (42) zu bilden, die dazu bestimmt sind, mit den Lagern (21) zusammenzuwirken,
wobei der Sattel (4) konfiguriert ist, um an ein Gehäuse (3) aus Kunststoff derart angebaut zu werden, dass ein Verdunkelungsrollladen nach einem der Ansprüche 1 bis 10 gebildet wird.

12. Fahrzeug, das mit mindestens einem Verdunkelungsrollladen nach einem der Ansprüche 1 bis 10 ausgerüstet ist, des Typs, der ein Verdunkelungstuch (1) aufweist, das zwischen einer aufgerollten Position und einer ausgebreiteten Position beweglich ist, wobei das Tuch (1) an einem seiner Enden fest mit einer Aufrollröhre (2) verbunden ist, die an jedem ihrer Enden auf einem Lager (21) drehend montiert ist,
wobei der Rollladen ein Gehäuse (3) aus Kunststoff aufweist, das einen Tragsattel (4) der Röhre trägt, wobei der Sattel (4) aus einem Metallwerkstoff ausgebildet ist und die Form einer Schiene (41) hat, die an jedem ihrer Enden im Wesentlichen im rechten Winkel zurückgefaltet ist, um zwei Ohren (42) zu bilden, die dazu bestimmt sind, mit den Lagern (21) zusammenzuwirken.
